# EUROPEAN PATENT SPECIFICATION

(11) **EP 4 156 388 B1**
(45) Date of publication and mention of the grant of the patent: **31.12.2025**
(21) Application number: 20936964.4
(22) Date of filing: 11.11.2020
(51) Int. Cl.: H01M 50/112, H01M 10/6551, B60L 50/64, H01M 50/383, H01M 50/249, H01M 50/242

(54) **BATTERY PACK HOUSING, BATTERY PACK AND ELECTRIC VEHICLE**
BATTERIEPACKGEHÄUSE, BATTERIEPACK UND ELEKTROFAHRZEUG
BOÎTIER DE BLOC-BATTERIE, BLOC-BATTERIE ET VÉHICULE ÉLECTRIQUE

(30) Priority: 22.05.2020 CN 202010444233
(43) Date of publication of application: 29.03.2023
(73) Proprietor: BYD Company Limited, Shenzhen, Guangdong 518118 (CN)
(72) Inventor: WANG, Xiaopeng, Shenzhen, Guangdong 518118 (CN); PENG, Qingbo, Shenzhen, Guangdong 518118 (CN); LU, Zhipei, Shenzhen, Guangdong 518118 (CN); ZHU, Jianhua, Shenzhen, Guangdong 518118 (CN); ZHU, Yan, Shenzhen, Guangdong 518118 (CN)
(74) Representative: Dehns Germany Partnerschaft mbB
(86) International application number: PCT/CN2020/128117
(87) International publication number: WO 2021/232705

(56) References cited:
- CN-A- 107 068 925
- CN-A- 110 190 211
- CN-A- 111 293 253
- CN-A- 111 312 964
- CN-U- 207 743 300
- CN-U- 207 818 635
- CN-U- 207 818 635
- CN-U- 210 984 839
- US-A1- 2016 329 538
- US-A1- 2017 229 683
- US-A1- 2019 006 654

## Description

### FIELD

The present invention relates to the field of batteries, and specifically to a battery pack housing, a battery pack, and an electric vehicle.

### BACKGROUND

In the related art, a battery pack housing includes a tray and an upper cover connected to the tray, where the tray is usually formed by welding multiple side beams and a bottom plate. Moreover, as a main load-bearing component, the tray is generally welded with some reinforcing transverse and longitudinal beams inside the tray to ensure that the tray has a sufficient structural strength. As a result, the tray is caused to have too much components, and have a complex structure and a low space utilization rate. Moreover, the existing battery pack housing is relatively simple in structure and less versatile, which is adverse to the standardization, modularization and mass production of battery packs.

CN 110 190 211 A relates to a battery tray, a power battery pack and a vehicle. The battery tray comprises a tray body. The tray body comprises a bottom plate, an edge beam and a plurality of partition plates. The edge beam is arranged around the bottom plate and defines an accommodating space for the battery single bodies together with the bottom plate. The partition plates are arranged on the bottom plate and divide the bottom plate into a plurality of areas for placing the battery single bodies. Gas channels are formed in the partition plates and the edge beam and are communicated with one another. A plurality of gas inlet holes are formed in the partition plates. At least one exhaust hole is formed in the edge beam and used for guiding flames, smoke or gas exhausted by the battery single bodies into the gas channels, and the exhaust holes are used for exhausting the flames, the smoke or the gas in the gas channels.

### SUMMARY

The present invention refers to a battery pack housing, a battery pack, and an electric vehicle with the features of the independent claims. In a first aspect of the present invention, a battery pack housing is provided, which includes a housing body, including multiple connected sub-housings, where at least one sub-housing is provided with at least one reinforcing plate therein.

The sub-housing includes a top plate and a bottom plate arranged opposite to each other in a first direction, in which the first direction is a height direction of the housing. The reinforcing plate is located between the top plate and the bottom plate, the at least one reinforcing plate is connected to the top plate and the bottom plate, and the at least one reinforcing plate divides the interior of a corresponding sub-housing into multiple accommodating cavities.

A mounting portion is provided on the housing, which is configured to be connected and fixed to an external load.

In a second aspect of the present invention, a battery pack is provided, including a battery pack housing as described above.

In a third aspect of the present invention, an electric vehicle is provided, including a vehicle body and a battery pack as described above, where the battery pack is fixed to the vehicle body by the mounting portion.

The present invention has the following beneficial effects. The battery pack housing according to the present invention includes multiple connected sub-housings, and the number of the sub-housings can be selected according to actual needs, to increases the flexibility and versatility in the design of the battery pack, and facilitate the standardization, modularization and mass production of the battery pack. Moreover, in the present invention, the reinforcing plate is located between the top plate and the bottom plate, and the reinforcing plate is connected to the top plate and the bottom plate. Such a design allows the reinforcing plate, the top plate and the bottom plate to form an "I"-shaped structure. This structure has high strength and rigidity, so the battery pack housing has a good load-bearing capacity, impact resistance, extrusion resistance, and other performances. Further, the battery pack housing according to the present invention has simple structure, low manufacturing cost, and high space utilization rate. Furthermore, when this battery pack is mounted on a vehicle, the structural strength of the battery pack serves as part of the structural strength of the vehicle, to improve the structural strength of the vehicle, help to meet the design requirement of lightweight of the electric vehicle, and reduce the design and manufacturing costs of the vehicle.

### BRIEF DESCRIPTION OF THE DRAWINGS

Fig. 1 is a schematic structural view of a battery pack provided in an embodiment of the present invention;
Fig. 2 is a schematic structural view of a battery pack housing provided in an embodiment of the present invention;
Fig. 3 is a partially enlarged view of part A in Fig. 2;
Fig. 4 is an exploded view of a battery pack housing provided in an embodiment of the present invention;
Fig. 5 is an exploded view of a battery pack housing provided in an embodiment of the present invention;
Fig. 6 is an exploded view of a battery pack housing provided in another embodiment of the present invention;
Fig. 7 is a schematic structural view of an anti-explosion valve provided in an embodiment of the present invention;
Fig. 8 is a schematic structural view of a sub-housing provided in an embodiment of the present invention;
Fig. 9 is a partially enlarged view of part B in Fig. 8;
Fig. 10 is a schematic structural view of another sub-housing provided in an embodiment of the present invention;
Fig. 11 is a partially enlarged view of part C in Fig. 10; and
Fig. 12 is a schematic structural view of an electric vehicle provided in an embodiment of the present invention.

### DETAILED DESCRIPTION

The following descriptions are exemplary implementations of the present invention. It should be noted that a person of ordinary skill in the art may make certain improvements and polishing without departing from the principle of the present invention and the improvements and polishing shall fall within the protection scope of the present invention.

In the description of the present invention, it should be understood that the orientations or positional relationships indicated by the terms "length", "width", "upper", "lower", "front", "rear", "left", "right", "vertical", "horizontal", "top", "bottom", "inner", "outer", etc. are the orientations or positional relationships shown in the drawings, are merely to facilitate describing the present invention and to simplify the description, are not intended to indicate or imply that the referenced device or element must have a particular orientation, be constructed and operated in a particular orientation, and therefore are not to be construed as limiting the present invention.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include one or more features. In description of the present invention, "multiple" means two or more than two, unless it is specifically defined otherwise.

In the present invention, unless otherwise explicitly specified or defined, the terms such as "mount", "install", "connect", "connection", and "fixed" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components or interaction between two components. A person of ordinary skill in the art may understand the specific meanings of the foregoing terms in the present invention according to specific situations.

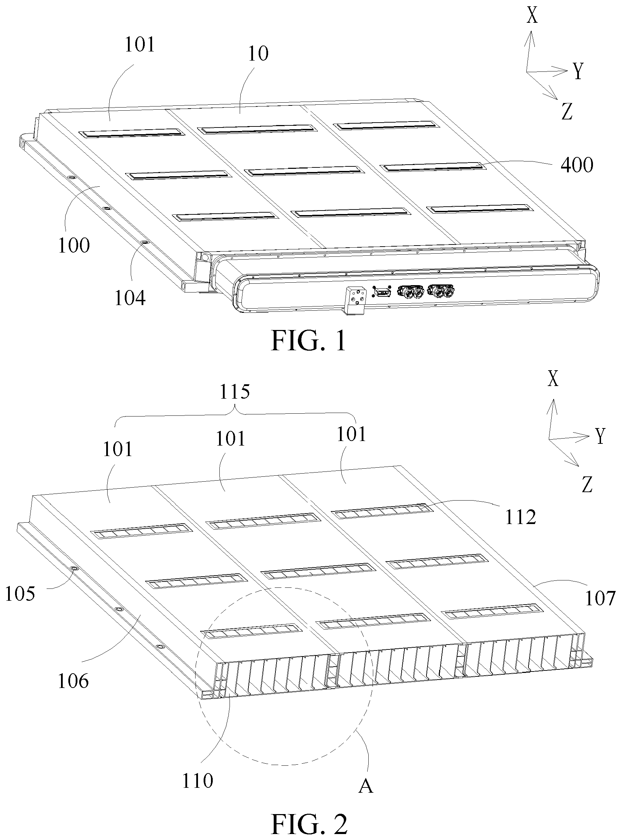

Referring to Figs. 1 to 4, a first embodiment of the present invention provides a battery pack housing 100. The housing 100 includes a housing body 115, and the housing body 115 includes multiple connected sub-housings 101. At least one sub-housing 101 is provided with at least one reinforcing plate 200 therein. The sub-housing 101 includes a top plate 102 and a bottom plate 103 arranged opposite to each other in a first direction, in which the first direction is a height direction of the housing 100. The reinforcing plate 200 is located between the top plate 102 and the bottom plate 103, the at least one reinforcing plate 200 is connected to the top plate 102 and the bottom plate 103, and the at least one reinforcing plate 200 divides the interior of a corresponding sub-housing 101 into multiple accommodating cavities 300. A mounting portion 104 is provided on the housing 100, and the mounting portion 104 is configured to be connected and fixed to an external load. The first direction is the X direction in the figure.

The housing 100 of a battery pack 10 according to the present invention includes multiple connected sub-housings 101, and the number of the sub-housings 101 can be selected according to actual needs, to increases the flexibility and versatility in the design of the battery pack 10, and facilitate the standardization, modularization and mass production of the battery pack 10. Moreover, in the present invention, the reinforcing plate 200 is located between the top plate 102 and the bottom plate 103, and the reinforcing plate 200 is connected to the top plate 102 and the bottom plate 103. Such a design allows the reinforcing plate 200, the top plate 102 and the bottom plate 103 to form an "I"-shaped structure. This structure has high strength and rigidity, so the housing 100 of the battery pack 10 has a good load-bearing capacity, impact resistance, extrusion resistance, and other performances. Moreover, the housing of the battery pack 10 according to the present invention has a simple structure, low manufacturing cost, and high space utilization rate. Furthermore, when this battery pack 10 is mounted on a vehicle, the structural strength of the battery pack 10 serves as part of the structural strength of the vehicle, to improve the structural strength of the vehicle, help to meet the design requirement of lightweight of the electric vehicle, and reduce the design and manufacturing costs of the vehicle.

It should be noted that a mounting portion 104 is provided on the housing 100 of the battery pack 10 according to the present invention. The housing 100 of the battery pack 10 is detachably or non-detachably connected and fixed to an external load through the mounting portion 104 provided thereon. Generally, the housing 100 of the battery pack 10 needs to be fixedly connected to an external load, and thus has special requirements in terms of the impact resistance, extrusion resistance and other performance, so it cannot simply be equivalent to a casing of a battery module or a cell. Generally, the battery pack 10 also includes at least one of a battery management system (BMS), a battery connector, a battery sampler and a battery thermal management system.

In addition, the reinforcing plate 200 is connected to the top plate 102 and the bottom plate 103. It can be understood that the reinforcing plate 200 may be formed integrally with the top plate 102 and the bottom plate 103; or the reinforcing plate 200, the top plate 102 and the bottom plate 103 are fabricated separately, and then connected directly or indirectly, which is not particularly limited in the present invention. The direct connection may be a situation where one end of the reinforcing plate 200 is connected to the bottom plate 103, and the opposite other end of the reinforcing plate 200 is connected to the top plate 102. The indirect connection may be a situation where one end of the reinforcing plate 200 is connected to the bottom plate 103 via an intermediate plate, and the opposite other end of the reinforcing plate 200 is connected to the top plate 102 via an intermediate plate.

In some embodiments, the at least one reinforcing plate 200 is connected to the top plate 102 and the bottom plate 103. It can be understood that the top plate 102, the bottom plate 103 and the reinforcing plate 200 are integrally formed; or one of the top plate 102 and the bottom plate 103 is integrally formed with the reinforcing plate 200, and the other is welded to the reinforcing plate 200; or one end of the reinforcing plate 200 is welded to the bottom plate 103, and the opposite other end of the reinforcing plate 200 is welded to the top plate 102. Alternatively, one end of the reinforcing plate 200 is welded to the bottom plate 103, and then the opposite other end of the reinforcing plate 200 is welded to the top plate 102.

In an embodiment, as shown in Fig. 1 and Fig. 2, the housing 100 further includes a first side beam 106 and a second side beam 107 arranged at two opposite sides of the housing body 115 in a second direction, where the second direction is a width direction of the housing 100 or a length direction of the housing 100. The second direction is the Y direction in the figure.

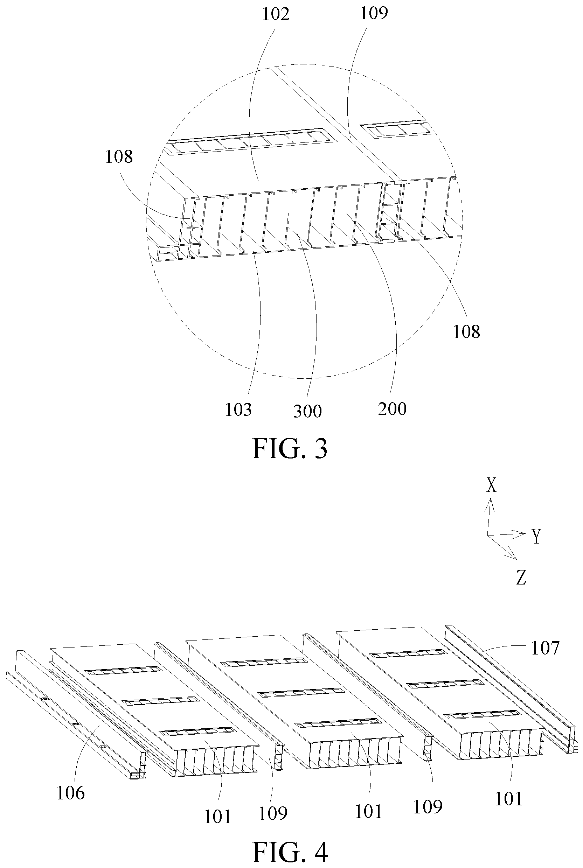

In an embodiment, as shown in Fig. 4, the multiple sub-housings 101 are arranged in sequence along the second direction. Among the multiple sub-housings 101, the sub-housings 101 at two ends in the second direction are end sub-housings. One of the two end sub-housings is connected to the first side beam 106, and the other is connected to the second side beam 107. A first sub-housing 101 and a last sub-housing 101 in the Y direction in Fig. 4 are end sub-housings.

According to some embodiments of the present invention, the end sub-housing connected to the first side beam 106 is integrally formed with the first side beam 106, and the end sub-housing connected to the second side beam 107 is integrally formed with the second side beam 107. As such, this structure can not only simplify the processing process and reduce the cost, but also be ensured to have a sufficient structural strength.

In some embodiments, at least one of the top plate 102 and the bottom plate 103 of the end sub-housing connected to the first side beam 106 is integrally formed with the first side beam 106, and at least one of the top plate 102 and the bottom plate 103 of the end sub-housing connected to the second side beam 107 is integrally formed with the second side beam 107. For example, the structure is formed by extrusion with one-piece aluminum profile.

However, in other embodiments, the end sub-housing connected to the first side beam 106 is integrally formed with the first side beam 106, and the end sub-housing connected to the second side beam 107 is directly or indirectly connected to the second side beam 107. Alternatively, the end sub-housing connected to the second side beam 107 is integrally formed with the second side beam 107, and the end sub-housing connected to the first side beam 106 is directly or indirectly connected to the first side beam 106.

In an embodiment, as shown in Figs. 2 to 4, the first side beam 106 and the second side beam 107 each has a cavity therein, and a partition plate 108 is provided in the cavity, where the partition plate 108 divides the cavity into multiple sub-cavities. Such an arrangement can ensure that the first side beam 106 and the second side beam 107 have a certain structural strength, to improve the impact resistance and anti-extrusion strength of the battery pack 10. However, in other embodiments, the first side beam 106 or the second side beam 107 has a cavity therein.

In an embodiment, as shown in Figs. 2 to 4, the housing 100 further includes a connecting plate 109, where the connecting plate 109 is connected between two adjacent sub-housings 101. In the present invention, the pattern of connection is not particularly limited, and may be detachable connection, for example, by a bolt or a rivet; or non-detachable connection, for example, by welding or gluing.

In an embodiment, as shown in Fig. 3, the connecting plate 109 has a cavity therein, and a partition plate 108 is provided in the cavity, where the partition plate 108 divides the cavity into multiple sub-cavities. Such an arrangement can increase the structural strength of the connecting plate 109, thereby improving the reliability of connection between two sub-housings 101.

In an embodiment, as shown in Fig. 2 and Fig. 3, the sub-housing 101 is provided with multiple reinforcing plates 200, and the multiple reinforcing plates 200 are arranged at intervals in the second direction. The length of each reinforcing plate 200 extends along a third direction, and each reinforcing plate 200 is connected to the top plate 102 and the bottom plate 103, where the first direction, the second direction, and the third direction are different. In this embodiment, each sub-housing 101 is provided with multiple reinforcing plates 200. Definitely, in other embodiments, some of the sub-housings 101 are provided with multiple reinforcing plates 200 as desired in practice.

In the present invention, the first direction is the height direction of the housing 100, the second direction is the width direction of the housing 100, and the third direction is the length direction of the housing 100. Alternatively, the second direction is the length direction of the housing 100, and the third direction is the width direction of the housing 100. The first direction is the X direction, the second direction is the Y direction, and the third direction is the Z direction in the figure.

However, in other embodiments, any two of the first direction, the second direction, and the third direction may also be arranged at other angles with respect to each other, for example, 80°or 85°, which is not particularly limited in the present invention.

It should be noted that the reinforcing plate 200 is connected to the top plate 102 and the bottom plate 103. It can be understood that the reinforcing plate 200 may be formed integrally with the top plate 102 and the bottom plate 103; Alternatively, the reinforcing plate 200, the top plate 102 and the bottom plate 103 are fabricated separately, and then connected directly or indirectly, which is not particularly limited in the present invention.

In some embodiments, at least one of the top plate 102 and the bottom plate 103 is integrally formed with the reinforcing plate 200. Such an arrangement has simple processing process and reduced production cost, and also ensures that the housing 100 has a sufficient structural strength and rigidity, to meet the requirements of the housing 100 for load-bearing capacity, impact resistance, extrusion resistance, and other performances.

Specifically, the top plate 102, the bottom plate 103 and the reinforcing plate 200 are integrally formed. For example, the structure is formed by extrusion with one-piece aluminum profile. In another embodiment, the bottom plate 103 and the reinforcing plate 200 are integrally formed, and then the top plate 102 is welded to the reinforcing plate 200. Alternatively, the top plate 102 and the reinforcing plate 200 are integrally formed, and then the bottom plate 103 is welded to the reinforcing plate 200.

It can be understood that when each reinforcing plate 200 is connected to the top plate 102 and the bottom plate 103, each reinforcing plate 200, together with the top plate 102 and the bottom plate 103, forms an "I"-shaped structure. Therefore, the housing 100 of the battery pack 10 has generally a honeycomb structure. This structure has high strength and rigidity, to meet the requirements of the housing 100 for load-bearing capacity, impact resistance, extrusion resistance, and other performances. Moreover, the structure of the housing 100 is simple, and the space utilization rate is high. When this battery pack 10 is mounted on a vehicle, the structural strength of the battery pack 10 serves as part of the structural strength of the vehicle, to improve the structural strength of the vehicle, help to meet the design requirement of lightweight of the electric vehicle, and reduce the design and manufacturing costs of the vehicle.

In a further embodiment, the first side beam 106 and the second side beam 107 are provided with a mounting portion 104, and the mounting portion 104 is configured to be connected and fixed to an external load.

Definitely, in other embodiments, the mounting portion 104 may also be provided on the top plate 102 or the bottom plate 103.

In an embodiment, as shown in Fig. 1 and Fig. 2, the mounting portion 104 is a mounting hole 105 provided on the first side beam 106 and the second side beam 107. The mounting hole 105 is configured to extend therethrough by a fastener (such as a bolt or a rivet), to fixedly connect the battery pack 10 to an external load.

In some embodiments, the mounting hole 105 provided on the first side beam 106 penetrates the first side beam 106 in the first direction, and the mounting hole 105 provided on the second side beam 107 penetrates the second side beam 107 in the first direction. However, the axial direction of the mounting hole 105 may also be arranged at an angle with respect to the first direction, for example 5° or 10°.

According to some embodiments of the present invention, multiple mounting holes 105 are provided, and the mounting holes 105 provided on the first side beam 106 are arranged in sequence along the length direction of the first side beam 106. The length direction of the first side beam 106 is parallel to the third direction.

Similarly, the mounting holes 105 provided on the second side beam 107 are arranged in sequence along the length direction of the second side beam 107. The length direction of the second side beam 107 is parallel to the third direction.

Definitely, in another embodiment, the mounting portion 104 is a ring provided on the first side beam 106 and the second side beam 107. The ring is fixedly connected to an external load, to fixedly connect the battery pack 10 to an external load.

However, in another embodiment, the mounting portion 104 is a mounting block provided on the first side beam 106 and the second side beam 107. The mounting block is fixed to an external load by welding. Definitely, the mounting block can also be fixed to the external load by gluing or engaging.

In an embodiment, the length of the accommodating cavity 300along the third direction is greater than 500 mm. According to some embodiments of the present invention, the length of the accommodating cavity 300 along the third direction is 500 mm-2500 mm. Such a design can accommodate more batteries or electrode core sets, to enable the battery pack 10 to meet the requirements of high capacity and high space utilization rate.

According to some embodiments of the present invention, the length of the accommodating cavity 300 along the third direction is 1000 mm-2000 mm.

According to some embodiments of the present invention, the length of the accommodating cavity 300 along the third direction is 1300 mm-2200 mm.

In some embodiments, as shown in Fig. 2, Fig. 5 and Fig. 6, the sub-housing 101 has a first end and a second end opposite to each other in the third direction, and the sub-housing 101 is provided with an opening 110 at at least one of the first end and the second. The housing 100 further includes an end plate 111 closing the opening 110. Each opening 110 corresponds to at least one end plate 111. Through such an arrangement, only the end plate 111 corresponding to the opening 110 of the sub-housings 101 is needed to be removed in a case of replacement or maintenance, so as to simplify the operation.

The pattern of the end plate 111 sealing the opening 110 of the sub-housing 101 is not particularly limited. For example, the end plate 111 is welded to the sub-housing 101 to close the opening 110 of the sub-housing 101; or the end plate 111 is bonded to the sub-housing 101 to close the opening 110 of the sub-housing 101; or the end plate 111 is riveted or screwed to the sub-housing 101, and a gasket is provided between the end plate 111 and the sub-housing 101, to close the opening 110 of the sub-housing 101.

In this embodiment, both the first end and the second end of each sub-housing 101 are provided with an opening 110, and each opening 110 corresponds to one end plate 111 respectively. Definitely, in other embodiments, each opening 110 may correspond to multiple end plates 111, that is, multiple end plates 111 close one opening 110 of the sub-housing 101.

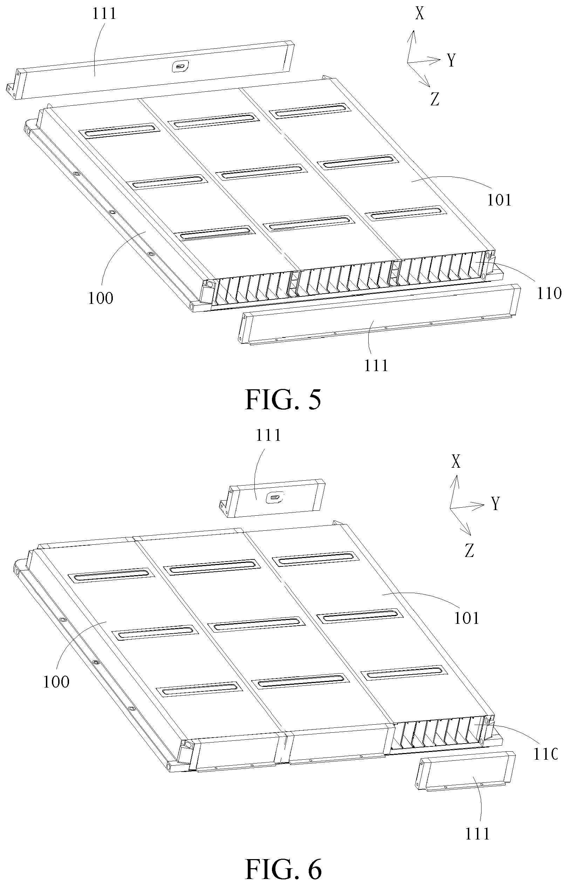

According to some embodiments of the present invention, as shown in Fig. 2 and Fig. 5, the multiple end plates 111 located at the same end of the housing body 115 in the third direction are an integrally formed piece. That is, the multiple end plates 111 located at the first end of the housing body 115 are an integrally formed piece; or the multiple end plates 111 located at the second end of the housing body 115 are an integrally formed piece; or the multiple end plates 111 located at the first end of the housing body 115 and the multiple end plates 111 located at the second end of the housing body 115 are both an integrally formed piece. Such an arrangement can simplify the processing of the end plate 111, and reduce the cost.

In some embodiments, the battery pack housing 100 is a sealed housing 100, and the atmospheric pressure in the accommodating cavity 300 is lower than the atmospheric pressure outside the housing 100. Through such an arrangement, the atmospheric pressure in the accommodating cavity 300 is made lower than atmospheric pressure outside the housing 100 by evacuation. Therefore, moisture and other substances present in the housing 100 can be reduced, to avoid the long-term aging effect and damage of the moisture on/to the electrode core set, battery and other components in the housing 100, and improve the service life of the battery pack 10. Furthermore, the sealed housing 100 also provides a secondary sealing effect.

In an embodiment, the pressure in the accommodating cavity 300 is -40 KPa to -70 KPa. Such an arrangement can ensure the reduction of moisture, oxygen, and other substances present in the housing 100, to avoid the long-term aging effect of the moisture and oxygen on the electrode core set and various components in the housing 100, and improve the service life of the electrode core set and various components in the housing 100.

In an embodiment, the housing 100 is provided with a gas exhaust hole communicating with the accommodating cavity 300, via which the interior of the housing 100 is evacuated. Therefore, moisture and other substances present in the housing 100 can be reduced, to avoid the long-term aging effect and damage of the moisture on/to the battery or electrode core set and other components in the housing 100, and improve the service life of the battery pack 10.

In some embodiments, the housing 100 is provided with an adhesive injection hole 112 (as shown in Fig. 2), and each accommodating cavity 300 communicates with at least one adhesive injection hole 112 correspondingly. The adhesive injection hole 112 is configured to fill an adhesive into a corresponding accommodating cavity 300, to fixedly connect the electrode core set or battery arranged in the accommodating cavity 300 to the housing 100, and thus further improve the structural strength of the battery pack 10. In this embodiment, the adhesive injection hole 112 is provided on the top plate 102 of the sub-housing 101. Definitely, in other embodiments, the adhesive injection hole 112 may also be provided on the bottom plate 103 of the sub-housing 101.

In some embodiments, as shown in Fig. 1 and Fig. 2, the housing 100 is provided with an anti-explosion valve 400, and the anti-explosion valve 400 seals the adhesive injection hole 112. As such, the anti-explosion valve 400 can act as a sealing cover to seal the adhesive injection hole 112, and also function to prevent explosion.

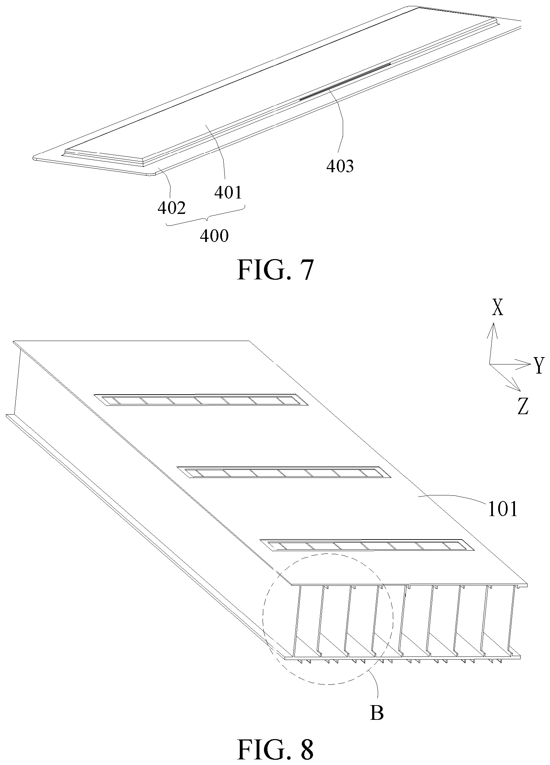

In some embodiments, as shown in Fig. 7, the anti-explosion valve 400 has a weak area 403; and the anti-explosion valve 400 includes a cover 402 hermetically connected to the housing 100 and a protruding portion 401 provided on the cover 402. The protruding portion 401 protrudes toward a side away from the housing 100, and the weak area 403 is formed on an outer peripheral wall of the protruding portion 401. As such, when the electrode core set in battery pack 10 works abnormally and causes excessive gas production, the gas pressure will break the weak area 403 of the anti-explosion valve 400, to avoid the occurrence of safety incidents of the battery pack 10.

It should be noted that the weak area 403 may be a groove or a notch. Alternatively, the thickness of the weak area 403 is lower than the thickness of other parts on the anti-explosion valve 400.

According to some embodiments of the present invention, the adhesive injection hole 112 is provided on the top plate 102, and the cover 402 is hermetically connected to the top plate 102. The pattern of hermetical connection is not particularly limited, for example, the hermetical connection can be achieved by welding or gluing.

In some embodiments, the anti-explosion valve 400 includes a cover 402 and a protruding portion 401 provided on the cover body 402. An edge of the cover 402 is connected to an inner wall of the adhesive injection hole 112, and the protruding portion 401 protrudes from the cover 402 toward a side away from the electrode core set.

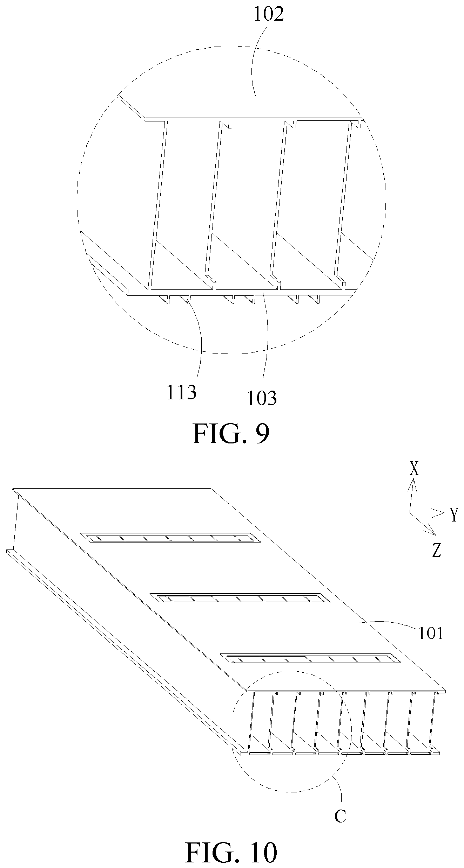

In some embodiments, as shown in Fig. 8 and Fig. 9, the bottom plate 103 is provided with a heat dissipation fin 113. According to some embodiments of the present invention, the heat dissipation fin 113 and the bottom plate 103 are integrally formed. For example, the bottom plate 103 is formed with the heat dissipation fin 113 by integral extrusion of aluminum profile. Such an arrangement can simplify the processing process and reduce the cost.

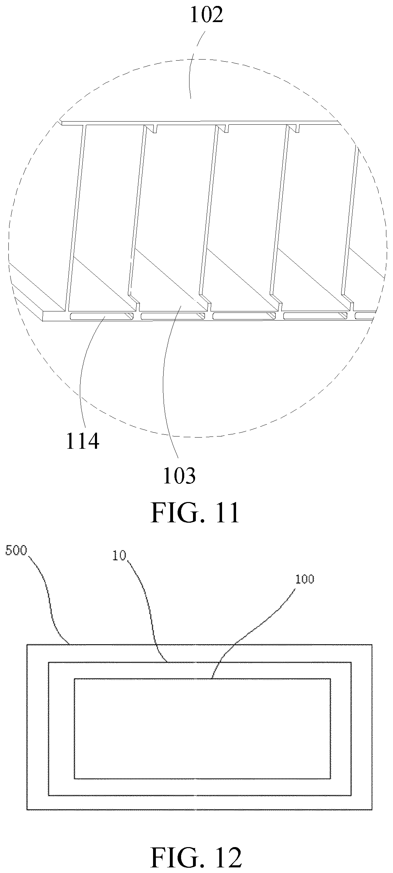

In some embodiments, as shown in Fig. 10 and Fig. 11, the bottom plate 103 is provided with a flow channel 114. According to some embodiments of the present invention, the flow channel 114 is integrally formed on the bottom plate 103. For example, the bottom plate 103 is formed with the flow channel 114 by integral extrusion of aluminum profile. Such an arrangement can simplify the processing process and reduce the cost.

Moreover, the present invention further provides a battery pack 10, which includes a battery pack housing 100 as described above. The battery pack 10 according to the present invention has a battery pack housing100 as described above, which increases the flexibility and versatility in the design of the battery pack 10, and facilitate the standardization, modularization and mass production of the battery pack 10. Moreover, the battery pack housing 100 has a good load-bearing capacity, impact resistance and extrusion resistance, to allow the battery pack 10 to have a high structural strength.

In another aspect, the present invention further provides an electric vehicle 500 (see Fig. 12), which includes a vehicle body and a battery pack 10 mentioned above, where the battery pack 10 is fixed to the vehicle body by the mounting portion 104. In the electric vehicle 500 provided in the present invention, when this battery pack 10 is mounted on a vehicle, the structural strength of the battery pack 10 serves as part of the structural strength of the vehicle, to improve the structural strength of the vehicle, help to meet the design requirement of lightweight of the electric vehicle, and reduce the design and manufacturing costs of the vehicle. In addition, the battery pack 10 according to the present invention has a relatively low height, and thus will not occupy too much space in the height of the vehicle

The foregoing embodiments are only several implementations of the present invention and are described in detail, but cannot be understood as limiting the patent scope of the present invention. It should be noted that a person of ordinary skill in the art may further make several variations and improvements without departing from the idea of the present invention, and the variations and improvements all fall within the protection scope of the present invention. Therefore, the patent protection scope of the present invention shall be subject to the appended claims.

### Reference numerals:

10. battery pack;
100. housing; 101. sub-housings; 102. top plate; 103. bottom plate; 104. mounting portion; 105. mounting hole; 106. first side beam; 107. second side beam; 108. partition plate; 109. connecting plate; 110. opening; 111. end plate; 112. adhesive injection hole; 113. heat dissipation fin; 114. flow channel; 115. housing body;
200. reinforcing plate;
300. accommodating cavity;
400. anti-explosion valve; 401. protruding portion; 402. cover; 403. weak area;
500. electric vehicle.

## Claims

1. A battery pack housing (100), comprising a housing body (115), wherein the housing body (115) comprises a plurality of connected sub-housings (101), at least one of the plurality of sub-housing (101) is provided with at least one reinforcing plate (200) therein;
the at least one of the plurality of sub-housings (101) comprises a top plate (102) and a bottom plate (103) arranged opposite to each other in a first direction, the first direction is a height direction of the housing (100), the at least one reinforcing plate (200) is located between the top plate (102) and the bottom plate (103), the at least one reinforcing plate (200) is connected to the top plate (102) and the bottom plate (103), and the at least one reinforcing plate (200) divides the interior of a corresponding sub-housing (101) into a plurality of accommodating cavities (300); and
a mounting portion is provided on the housing (100), which is configured to be connected and fixed to an external load;
wherein the housing (100) is provided with an adhesive injection hole (112), and each accommodating cavity (300) communicates with at least one adhesive injection hole (112) correspondingly;
wherein the housing (100) is provided with an anti-explosion valve (400), and the anti-explosion valve (400) seals the adhesive injection hole (112);
wherein the anti-explosion valve (400) has a weak area (403); and the anti-explosion valve (400) comprises a cover (402) hermetically connected to the housing (100) and a protruding portion (401) provided on the cover (402), the protruding portion (401) protrudes toward a side away from the housing (100), and the weak area (403) is formed on an outer peripheral wall of the protruding portion (401).

2. The battery pack housing according to claim 1, further comprising a first side beam (106) and a second side beam (107) arranged at two opposite sides of the housing body (115) in a second direction, wherein the second direction is a width direction of the housing (100) or a length direction of the housing (100).

3. The battery pack housing according to claim 2, wherein the plurality of sub-housings (101) are arranged in sequence along the second direction, among the plurality of sub-housings (101), the sub-housings (101) at two ends in the second direction are end sub-housings, one of the two end sub-housings is connected to the first side beam (106), and the other is connected to the second side beam (107).

4. The battery pack housing according to claim 3, wherein the end sub-housing connected to the first side beam (106) is integrally formed with the first side beam (106); or the end sub-housing connected to the second side beam (107) is integrally formed with the second side beam (107); or the end sub-housing connected to the first side beam (106) is integrally formed with the first side beam (106) and the end sub-housing connected to the second side beam (107) is integrally formed with the second side beam (107).

5. The battery pack housing according to claim 2, wherein at least one of the first side beam (106) and the second side beam (107) has a cavity therein, a partition plate (108) is provided in the cavity, and the partition plate (108) divides the cavity into a plurality of sub-cavities.

6. The battery pack housing according to any one of claims 1 to 5, wherein the housing body (115) further comprises a connecting plate (109), connected between two adjacent sub-housings (101), particularly
wherein the connecting plate (109) has a cavity therein, a partition plate (108) is provided in the cavity, and the partition plate (108) divides the cavity into a plurality of sub-cavities.

7. The battery pack housing according to claim 1, wherein a plurality of reinforcing plates (200) are provided in the sub-housing (101), the plurality of reinforcing plates (200) are arranged at intervals in a second direction, a length of each reinforcing plate (200) extends along a third direction, and each reinforcing plate (200) is connected to the top plate (102) and the bottom plate, in which the second direction is a width direction of the housing (100), and the third direction is a length direction of the housing (100); or the second direction is the length direction of the housing (100), and the third direction is the width direction of the housing (100), particularly
wherein at least one of the top plate (102) and the bottom plate (103) is integrally formed with the reinforcing plate (200).

8. The battery pack housing according to claim 1, wherein a length of the accommodating cavity (300) along a third direction is greater than 500 mm, and the third direction is a length direction of the housing (100) or a width direction of the housing (100).

9. The battery pack housing according to claim 1, wherein the sub-housing (101) has a first end and a second end opposite to each other in a third direction, and the sub-housing (101) is provided with an opening at at least one of the first end and the second end; and the housing (100) further comprises an end plate (111) closing the opening, and each opening corresponds to at least one end plate (111), in which the third direction is a length direction of the housing (100) or a width direction of the housing (100), particularly
wherein a plurality of end plates (111) located at the same end of the housing body (100) in the third direction are an integrally formed piece.

10. The battery pack housing according to claim 1, wherein the bottom plate (103) is provided with a flow channel communicating with the exterior.

11. The battery pack housing according to claim 1, wherein the bottom plate (103) is provided with a heat dissipation fin (113).

12. The battery pack housing according to claim 1, further comprising a first side beam (106) and a second side beam (107) arranged at two opposite sides of the housing body (115) in a second direction, wherein:
a plurality of reinforcing plates (200) are provided in each sub-housing (101), the plurality of reinforcing plates (200) are arranged at intervals in the second direction, a length of each reinforcing plate (200) extends along the third direction, and each reinforcing plate is connected to the top plate (102) and the bottom plate (103); and at least one of the top plate (102) and the bottom plate (103) is integrally formed with the reinforcing plate (200);
the sub-housing (101) has a first end and a second end opposite to each other in a third direction, the sub-housing (101) is provided with an opening at both the first end and the second end, the housing (100) further comprises an end plate (111) closing the opening, and each opening corresponds to at least one end plate (111), in which
the second direction is a width direction of the housing (100), and the third direction is the length direction of the housing (100); or the second direction is the length direction of the housing (100), and the third direction is the width direction of the housing (100).

13. A battery pack (10), comprising a battery pack housing (100) according to any one of claims 1 to 12.

14. An electric vehicle (500), comprising a vehicle body and a battery pack (10) according to claim 13, wherein the battery pack (10) is fixed to the vehicle body by the mounting portion.

## Patentansprüche

1. Batteriepackgehäuse (100), das einen Gehäusekörper (115) umfasst, wobei der Gehäusekörper (115) eine Vielzahl von verbundenen Untergehäusen (101) umfasst, wobei mindestens eines der Vielzahl von Untergehäusen (101) mit mindestens einer Verstärkungsplatte (200) darin versehen ist;
das mindestens eine der Vielzahl von Untergehäusen (101) eine obere Platte (102) und eine untere Platte (103) umfasst, die einander gegenüberliegend in einer ersten Richtung angeordnet sind, wobei die erste Richtung eine Höhenrichtung des Gehäuses (100) ist, die mindestens eine Verstärkungsplatte (200) zwischen der oberen Platte (102) und der unteren Platte (103) angeordnet ist, die mindestens eine Verstärkungsplatte (200) mit der oberen Platte (102) und der unteren Platte (103) verbunden ist, und die mindestens eine Verstärkungsplatte (200) das Innere eines entsprechenden Untergehäuses (101) in eine Vielzahl von Aufnahmehohlräumen (300) unterteilt; und
ein Befestigungsabschnitt an dem Gehäuse (100) vorgesehen ist, der dazu konfiguriert ist, mit einer externen Last verbunden und an dieser befestigt zu werden;
wobei das Gehäuse (100) mit einem Klebstoffeinspritzloch (112) versehen ist und jeder Aufnahmehohlraum (300) entsprechend mit mindestens einem Klebstoffeinspritzloch (112) in Verbindung steht;
wobei das Gehäuse (100) mit einem Explosionsschutzventil (400) versehen ist, und das Explosionsschutzventil (400) das Klebstoffeinspritzloch (112) abdichtet;
wobei das Explosionsschutzventil (400) einen schwachen Bereich (403) aufweist; und das Explosionsschutzventil (400) eine Abdeckung (402), die hermetisch mit dem Gehäuse (100) verbunden ist, und einen vorstehenden Abschnitt (401), der an der Abdeckung (402) vorgesehen ist, umfasst, wobei der vorstehende Abschnitt (401) zu einer von dem Gehäuse (100) abgewandten Seite hin vorsteht, und der schwache Bereich (403) an einer äußeren Umfangswand des vorstehenden Abschnitts (401) ausgebildet ist.

2. Batteriepackgehäuse gemäß Anspruch 1, ferner umfassend einen ersten Seitenträger (106) und einen zweiten Seitenträger (107), die an zwei gegenüberliegenden Seiten des Gehäusekörpers (115) in einer zweiten Richtung angeordnet sind, wobei die zweite Richtung eine Breitenrichtung des Gehäuses (100) oder eine Längenrichtung des Gehäuses (100) ist.

3. Batteriegehäuse gemäß Anspruch 2, wobei die mehreren Teilgehäuse (101) in der zweiten Richtung aufeinanderfolgend angeordnet sind, wobei von den mehreren Teilgehäusen (101) die Teilgehäuse (101) an zwei Enden in der zweiten Richtung Endteilgehäuse sind, wobei eines der beiden Endteilgehäuse mit dem ersten Seitenträger (106) verbunden ist und das andere mit dem zweiten Seitenträger (107) verbunden ist.

4. Batteriepackgehäuse gemäß Anspruch 3, wobei das mit dem ersten Seitenträger (106) verbundene Endteilgehäuse einstückig mit dem ersten Seitenträger (106) ausgebildet ist; oder das mit dem zweiten Seitenträger (107) verbundene Endteilgehäuse einstückig mit dem zweiten Seitenträger (107) ausgebildet ist; oder das mit dem ersten Seitenträger (106) verbundene Endteilgehäuse einstückig mit dem ersten Seitenträger (106) ausgebildet ist und das mit dem zweiten Seitenträger (107) verbundene Endteilgehäuse einstückig mit dem zweiten Seitenträger (107) ausgebildet ist.

5. Batteriegehäuse gemäß Anspruch 2, wobei mindestens einer von dem ersten Seitenträger (106) und dem zweiten Seitenträger (107) einen Hohlraum darin aufweist, eine Trennplatte (108) in dem Hohlraum vorgesehen ist und die Trennplatte (108) den Hohlraum in eine Vielzahl von Unterhohlräumen unterteilt.

6. Batteriepackgehäuse gemäß einem der Ansprüche 1 bis 5, wobei der Gehäusekörper (115) ferner eine Verbindungsplatte (109) aufweist, die zwischen zwei benachbarten Teilgehäusen (101) verbunden ist, insbesondere
wobei die Verbindungsplatte (109) einen Hohlraum darin aufweist, eine Trennplatte (108) in dem Hohlraum vorgesehen ist, und die Trennplatte (108) den Hohlraum in eine Vielzahl von Unterhohlräumen unterteilt.

7. Batteriepackgehäuse gemäß Anspruch 1, wobei mehrere Verstärkungsplatten (200) in dem Untergehäuse (101) vorgesehen sind, die mehreren Verstärkungsplatten (200) in Abständen in einer zweiten Richtung angeordnet sind, sich eine Länge jeder Verstärkungsplatte (200) entlang einer dritten Richtung erstreckt und jede Verstärkungsplatte (200) mit der oberen Platte (102) und der unteren Platte verbunden ist, wobei die zweite Richtung eine Breitenrichtung des Gehäuses (100) ist und die dritte Richtung eine Längenrichtung des Gehäuses (100) ist; oder die zweite Richtung die Längsrichtung des Gehäuses (100) ist und die dritte Richtung die Breitenrichtung des Gehäuses (100) ist, insbesondere
wobei mindestens eine der oberen Platte (102) und der unteren Platte (103) einstückig mit der Verstärkungsplatte (200) ausgebildet ist.

8. Batteriepackgehäuse gemäß Anspruch 1, wobei eine Länge des Aufnahmehohlraums (300) entlang einer dritten Richtung größer als 500 mm ist und die dritte Richtung eine Längsrichtung des Gehäuses (100) oder eine Breitenrichtung des Gehäuses (100) ist.

9. Batteriepackgehäuse gemäß Anspruch 1, wobei das Untergehäuse (101) ein erstes Ende und ein zweites Ende aufweist, die sich in einer dritten Richtung gegenüberliegen, und das Untergehäuse (101) mit einer Öffnung an mindestens einem von dem ersten Ende und dem zweiten Ende versehen ist; und das Gehäuse (100) ferner eine Endplatte (111) umfasst, die die Öffnung verschließt, und jede Öffnung mindestens einer Endplatte (111) entspricht, wobei die dritte Richtung eine Längsrichtung des Gehäuses (100) oder eine Breitenrichtung des Gehäuses (100) ist, insbesondere
wobei eine Mehrzahl von Endplatten (111), die sich an demselben Ende des Gehäusekörpers (100) in der dritten Richtung befinden, ein einstückig geformtes Teil sind.

10. Batteriepackgehäuse gemäß Anspruch 1, wobei die Bodenplatte (103) mit einem mit dem Außenraum kommunizierenden Strömungskanal versehen ist.

11. Batteriepackgehäuse gemäß Anspruch 1, wobei die Bodenplatte (103) mit einer Wärmeableitungsrippe (113) versehen ist.

12. Batteriepackgehäuse gemäß Anspruch 1, ferner mit einem ersten Seitenträger (106) und einem zweiten Seitenträger (107), die an zwei gegenüberliegenden Seiten des Gehäusekörpers (115) in einer zweiten Richtung angeordnet sind, wobei:
mehrere Verstärkungsplatten (200) in jedem Untergehäuse (101) vorgesehen sind, die mehreren Verstärkungsplatten (200) in der zweiten Richtung in Abständen angeordnet sind, sich eine Länge jeder Verstärkungsplatte (200) entlang der dritten Richtung erstreckt und jede Verstärkungsplatte mit der oberen Platte (102) und der unteren Platte (103) verbunden ist; und mindestens eine der oberen Platte (102) und der unteren Platte (103) einstückig mit der Verstärkungsplatte (200) ausgebildet ist;
das Untergehäuse (101) ein erstes Ende und ein zweites Ende aufweist, die einander in einer dritten Richtung gegenüberliegen, das Untergehäuse (101) sowohl am ersten Ende als auch am zweiten Ende mit einer Öffnung versehen ist, das Gehäuse (100) ferner eine die Öffnung verschließende Endplatte (111) umfasst, und jede Öffnung mindestens einer Endplatte (111) entspricht, in der
die zweite Richtung eine Breitenrichtung des Gehäuses (100) ist und die dritte Richtung die Längenrichtung des Gehäuses (100) ist; oder die zweite Richtung die Längenrichtung des Gehäuses (100) ist und die dritte Richtung die Breitenrichtung des Gehäuses (100) ist.

13. Batteriepack (10), umfassend ein Batteriepackgehäuse (100) gemäß einem der Ansprüche 1 bis 12.

14. Elektrofahrzeug (500), das eine Fahrzeugkarosserie und ein Batteriepaket (10) gemäß Anspruch 13 umfasst, wobei das Batteriepaket (10) durch den Montageabschnitt an der Fahrzeugkarosserie befestigt ist.

## Revendications

1. Boîtier de bloc batterie (100), comprenant un corps de boîtier (115), dans lequel le corps de boîtier (115) comprend une pluralité de sous-boîtiers (101) reliés entre eux, l'un au moins de la pluralité de sous-boîtiers (101) étant prévu avec au moins une plaque de renfort (200) à l'intérieur ;
le au moins un de la pluralité de logements secondaires (101) comprend une plaque supérieure (102) et une plaque inférieure (103) disposées à l'opposé l'une de l'autre dans une première direction, la première direction est une direction de hauteur du logement (100), la au moins une plaque de renfort (200) est située entre la plaque supérieure (102) et la plaque inférieure (103), au moins une plaque de renfort (200) est reliée à la plaque supérieure (102) et à la plaque inférieure (103), et au moins une plaque de renfort (200) divise l'intérieur d'un sous-dossier correspondant (101) en une pluralité de cavités de logement (300) ; et
une partie de montage est prévue sur le boîtier (100), qui est configurée pour être connectée et fixée à une charge externe ;
dans lequel le boîtier (100) est prévu avec un trou d'injection d'adhésif (112), et chaque cavité d'accueil (300) communique avec au moins un trou d'injection d'adhésif (112) de manière correspondante ;
dans lequel le boîtier (100) est prévu avec une soupape anti-explosion (400), et la soupape anti-explosion (400) scelle le trou d'injection d'adhésif (112) ;
dans lequel la soupape anti-explosion (400) présente une zone faible (403) ; et la soupape anti-explosion (400) comprend un couvercle (402) relié hermétiquement au boîtier (100) et une partie saillante (401) prévue sur le couvercle (402), la partie saillante (401) fait saillie vers un côté éloigné du boîtier (100), et la zone faible (403) est formée sur une paroi périphérique extérieure de la partie saillante (401).

2. Boîtier de bloc batterie selon la revendication 1, comprenant en outre une première poutre latérale (106) et une deuxième poutre latérale (107) disposées sur deux côtés opposés du corps de boîtier (115) dans une deuxième direction, dans laquelle la deuxième direction est une direction de largeur du boîtier (100) ou une direction de longueur du boîtier (100).

3. Boîtier de bloc batterie selon la revendication 2, dans lequel la pluralité de logements secondaires (101) sont disposés en séquence le long de la deuxième direction, parmi la pluralité de logements secondaires (101), les logements secondaires (101) à deux extrémités dans la deuxième direction sont des logements secondaires d'extrémité, l'un des deux logements secondaires d'extrémité est relié à la première poutre latérale (106), et l'autre est relié à la deuxième poutre latérale (107).

4. Boîtier de batterie selon la revendication 3, dans lequel le sous-habitat d'extrémité relié à la première poutre latérale (106) est formé d'un seul tenant avec la première poutre latérale (106) ; ou le sous-habitat d'extrémité relié à la deuxième poutre latérale (107) est formé d'un seul tenant avec la deuxième poutre latérale (107) ; ou le sous-habitat d'extrémité relié à la première poutre latérale (106) est formé d'un seul tenant avec la première poutre latérale (106), et le sous-habitat d'extrémité relié à la deuxième poutre latérale (107) est formé d'un seul tenant avec la deuxième poutre latérale (107).

5. Boîtier de batterie selon la revendication 2, dans lequel au moins l'une de la première poutre latérale (106) et de la deuxième poutre latérale (107) comporte une cavité, une plaque de séparation (108) est prévue dans la cavité, et la plaque de séparation (108) divise la cavité en une pluralité de sous-cavités.

6. Boîtier de bloc de batterie selon l'une quelconque des revendications 1 à 5, dans lequel le corps de boîtier (115) comprend en outre une plaque de connexion (109), reliée entre deux sous-boîtiers adjacents (101), en particulier
dans lequel la plaque de connexion (109) comporte une cavité, une plaque de séparation (108) est prévue dans la cavité, et la plaque de séparation (108) divise la cavité en une pluralité de sous-cavités.

7. Boîtier de bloc batterie selon la revendication 1, dans lequel plusieurs plaques de renfort (200) sont prévues dans le sous-boîtier (101), les plusieurs plaques de renfort (200) sont disposées à intervalles dans une deuxième direction, une longueur de chaque plaque de renfort (200) s'étend le long d'une troisième direction, et chaque plaque de renfort (200) est reliée à la plaque supérieure (102) et à la plaque inférieure, dans laquelle la deuxième direction est une direction de largeur du boîtier (100), et la troisième direction est une direction de longueur du boîtier (100) ; ou la deuxième direction est la direction de la longueur du boîtier (100), et la troisième direction est la direction de la largeur du boîtier (100), en particulier
dans lequel au moins l'une de la plaque supérieure (102) et de la plaque inférieure (103) est formée d'un seul tenant avec la plaque de renforcement (200).

8. Boîtier de bloc batterie selon la revendication 1, dans lequel une longueur de la cavité de logement (300) le long d'une troisième direction est supérieure à 500 mm, et la troisième direction est une direction de longueur du boîtier (100) ou une direction de largeur du boîtier (100).

9. Boîtier de bloc batterie selon la revendication 1, dans lequel le sous-boîtier (101) présente une première extrémité et une deuxième extrémité opposées l'une à l'autre selon une troisième direction, et le sous-boîtier (101) est pourvu d'une ouverture à au moins l'une de la première extrémité et de la deuxième extrémité ; et le boîtier (100) comprend en outre une plaque d'extrémité (111) fermant l'ouverture, et chaque ouverture correspond à au moins une plaque d'extrémité (111), dans lequel la troisième direction est une direction de longueur du boîtier (100) ou une direction de largeur du boîtier (100), en particulier,
dans lequel une pluralité de plaques d'extrémité (111) situées à la même extrémité du corps de boîtier (100) dans la troisième direction constituent une pièce formée d'un seul tenant.

10. Boîtier de bloc batterie selon la revendication 1, dans lequel la plaque de fond (103) est prévue avec un canal d'écoulement communiquant avec l'extérieur.

11. Le bloc de batterie selon la revendication 1, dans lequel la plaque inférieure (103) est prévue avec une ailette de dissipation de chaleur (113).

12. Le boîtier de bloc de batterie selon la revendication 1, comprenant en outre une première poutre latérale (106) et une deuxième poutre latérale (107) disposées sur deux côtés opposés du corps de boîtier (115) dans une deuxième direction, dans laquelle :
une pluralité de plaques de renfort (200) sont prévues dans chaque sous-châssis (101), la pluralité de plaques de renfort (200) sont disposées à intervalles dans la deuxième direction, une longueur de chaque plaque de renfort (200) s'étend le long de la troisième direction, et chaque plaque de renfort est reliée à la plaque supérieure (102) et à la plaque inférieure (103) ; et au moins l'une de la plaque supérieure (102) et de la plaque inférieure (103) est formée d'une seule pièce avec la plaque de renfort (200) ;
le sous-domicile (101) a une première extrémité et une deuxième extrémité opposées l'une à l'autre dans une troisième direction, le sous-domicile (101) est prévu avec une ouverture à la fois à la première extrémité et à la deuxième extrémité, le boîtier (100) comprend en outre une plaque d'extrémité (111) fermant l'ouverture, et chaque ouverture correspond à au moins une plaque d'extrémité (111), dans laquelle
la deuxième direction est une direction de largeur du boîtier (100), et la troisième direction est la direction de longueur du boîtier (100) ; ou la deuxième direction est la direction de longueur du boîtier (100), et la troisième direction est la direction de largeur du boîtier (100).

13. Bloc de batteries (10), comprenant un boîtier de bloc de batteries (100) selon l'une quelconque des revendications 1 à 12.

14. Véhicule électrique (500), comprenant une carrosserie de véhicule et un bloc batterie (10) selon la revendication 13, dans lequel le bloc batterie (10) est fixé à la carrosserie du véhicule par la partie de montage.
